# EUROPEAN PATENT APPLICATION

(11) **EP 1 978 762 A1**
(43) Date of publication of application: **08.10.2008**
(21) Application number: 07007227.7
(22) Date of filing: 05.04.2007
(51) Int. Cl.: H04Q 7/22, H04Q 7/38

(54) **Service content synchronization of multicast data for mobile nodes moving between networks with different radio access technologies**

(71) Applicant: MATSUSHITA ELECTRIC INDUSTRIAL CO., LTD., Osaka 571-8501 (JP)
(72) Inventor: Gonsa, Osvaldo, Dr., 63225 Langen (DE); Becker, Ralf, 63225 Langen (DE); Hakenberg, Rolf, 63225 Langen (DE)
(74) Representative: Grünecker, Kinkeldey, Stockmair & Schwanhäusser Anwaltssozietät

(57) **Abstract**

The invention relates to a method for continuing the provision of a multicast service to a mobile node, which moved to a network area, in which the multicast service is provided at a different data rate than before. A content synchronization entity is introduced into the mobile communications system for deciding whether to establish an additional multicast session to be provided to the mobile node via an additional data channel, in order to allow a seamless multicast service provision. The content synchronization entity may base its decision on various parameters and algorithms, such as the progress of the session provision in the source network at the time the mobile node performs the handover. Subsequent mobile nodes that enter the same network area may reuse the previously established additional data channel and receive the additional multicast session, since the additional data channel may be established as a multicast radio bearer.

## Description

### FIELD OF THE INVENTION

The invention relates to a method for managing the continuous provision of a multicast service to a mobile node in a mobile communications system. The invention provides different method steps so as to enable the mobile node to continue the reception of multicast service data without interruptions while making handovers between network areas supporting different data rates. Furthermore, the invention relates to a multicast service provider, a gateway and a content synchronization which participate in the invention.

### TECHNICAL BACKGROUND

W-CDMA (Wideband Code Division Multiple Access) is a radio interface for IMT-2000 systems (International Mobile Telecommunication system), which was standardized for use as the 3rd generation wireless mobile telecommunication system. It provides a variety of services such as voice services and multimedia mobile communication services in a flexible and efficient way. The standardization bodies in Japan, Europe, USA, and other countries have jointly organized a project called the 3rd Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4, Release 5 and Release 6.

Recently, the 3GPP has begun considering the next major step or evolution of the 3G standard to ensure the long-term competitiveness of 3G. The 3GPP recently launched a study item "Evolved UTRA and UTRAN" better known as "Long Term Evolution (LTE)". The study will investigate means of achieving major leaps in performance in order to improve service provisioning and to reduce user and operator costs. It is generally assumed that Internet Protocols (IP) will be used in mobility control, and that all future services will be IP-based. Therefore, the focus of the evolution is on enhancements to the packet-switched (PS) domain of legacy UMTS systems.

The main objectives of the evolution are to further improve service provisioning and reduce user and operator costs, as already mentioned. More specifically, some key performance, capability and deployment requirements for the long-term evolution (LTE) are inter alia:
- significantly higher data rates compared to HSDPA and HSUPA (envisioned are target peak data rates of more than 100Mbps over the downlink and 50Mbps over the uplink),
- high data rates with wide-area coverage,
- significantly reduced latency in the user plane in the interest of improving the performance of higher layer protocols (for example, TCP) as well as reducing the delay associated with control plane procedures (for instance, session setup), and
- stand-alone system operation in spectrum allocations of different sizes ranging from 1.25 MHz to 20 MHz.

One other deployment-related requirement for the long-term evolution study is to allow for a smooth migration to these technologies.

### Current and LTE UTRAN Architecture

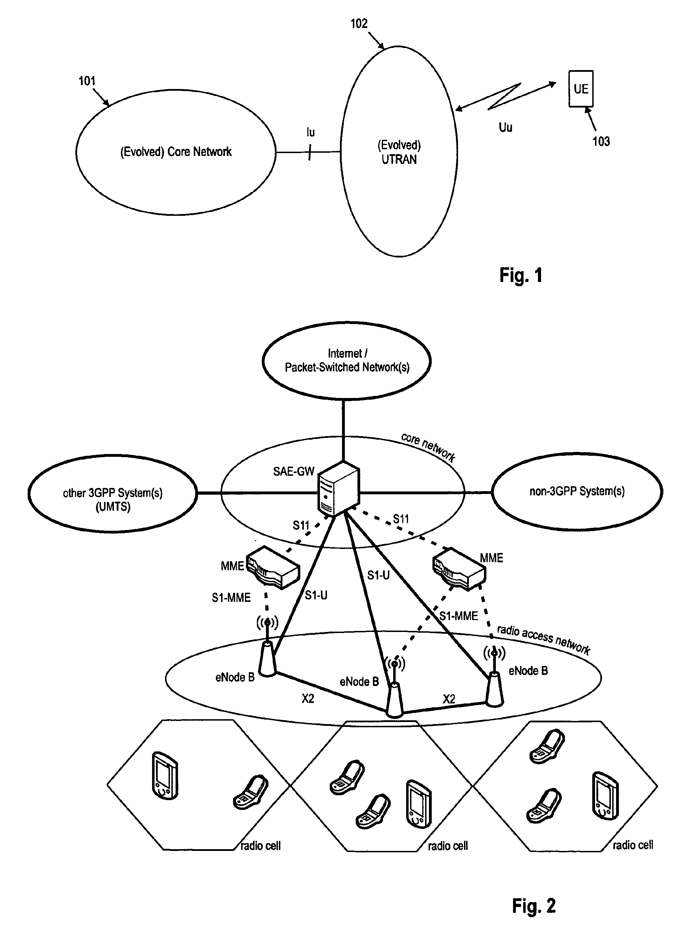

The high level Release 99/4/5/6 architecture of the Universal Mobile Telecommunication System (UMTS) is shown in Fig. 1 (see 3GPP TS 25.401: "UTRAN Overall Description", incorporated herein by reference, available from http://www.3gpp.org). The UMTS system consists of a number of network elements each having a defined function. Though the network elements are defined by their respective function, a similar physical implementation of the network elements may be common but not mandatory.

The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of CN/UTRAN and UTRAN/UE are defined by open interfaces (lu, Uu respectively). It should be noted that the UMTS system is modular, and it is therefore possible to have several network elements of the same type.

Fig. 2 illustrates an exemplary overview of a 3GPP LTE mobile communication network. The network consists of different network entities that are functionally grouped into the Core Network (CN), the Radio Access Network (RAN) and the User Equipments (UEs) or mobile terminals. The RAN is responsible for handling all radio-related functionality inter alia including scheduling of radio resources. The CN may be responsible for routing calls and data connections to external networks.

The LTE network is a "two node architecture" with respect to the user data plane, consisting of the so called SAE Gateway (SAE-GW) and enhanced Node Bs (also referred to as eNode Bs or eNBs). On the control plane, the mobility management entity (MME) is also present in addition to the above mentioned entities, and handles the non-access stratum (NAS) signaling and other related control signaling, like authentication and mobility management. The MME and SAE-GW will handle CN functions, such as Inter CN node signaling for mobility between 3GPP access networks, Idle mode UE Tracking and Reachability, routing calls and data connections to external networks. The eNode Bs may handle functions as for example header compression, ciphering/integrity protection, Radio Resource Control (RRC), segmentation/concatenation, scheduling and allocation of resources, multiplexing and physical layer functions.

A mobile communication network is typically modular, and it is therefore possible to have several network entities of the same type. The interconnections of network elements are defined by open interfaces. UEs can connect to an eNode B via the air interface denoted as Uu interface. The eNode Bs may have a connection to an SAE-GW via the so-called S1-U interface. The eNode Bs are themselves interconnected via the so-called X2 interface.

Both 3GPP and Non-3GPP integration may be handled via the SAE-GW's interface to the external packet data networks (e.g. Internet).

As already indicated above, in the exemplary network architecture of Fig. 2, it is assumed that the ownership of the cell resources is handled in each eNode B. Having the cell resource ownership outside the SAE-GW makes it possible to support pooling of SAE-GW (of both CP / UP flows), allowing one eNode B to be connected to several SAE-GWs for different terminals (thus avoiding a single point of failure).

### Multicast Service

A multicast capable service is for example the Multimedia Broadcast/Multicast Service (MBMS), which has also been standardized by the 3GPP (see 3GPP TS 23.246 v6.6.0: "Multimedia Broadcast/Multicast Service (MBMS); Architecture and functional description (Release 6)", incorporated herein by reference, available from http://www.3gpp.org). The MBMS service is a downlink multicast service for transmitting the same downlink data to a plurality of recipients through a radio network. The recipients typically share one radio channel, a shared or multicast radio bearer for the reception of MBMS service data. The MBMS service supports the transmission of multimedia data such as real-time image and voice or text.

MBMS sessions can be set up between a Broadcast Multicast - Service Center (BM-SC) and user equipment (UE) of a mobile communication system via a Gateway GPRS Support Node (GGSN) of the core network of the mobile communication system and a Radio Access Network (RAN) of the mobile communication system. The BM-SC activates MBMS bearer services that are to be used to provide the service data, wherein each bearer service is uniquely identified by a Temporary Mobile Group Identity (TMGI) . The TMGI is allocated globally by the BM-SC and is equivalent to the IP multicast address and Access Point Name (APN) pair. It is used for an efficient identification of the employed MBMS bearer. The TMGI is transmitted to the UE during the MBMS session activation for multicast sessions or during service announcement for broadcast sessions. The MBMS service can have one or more sessions of the same content. For instance, the MBMS service is the same (e.g. video newscast) but there are two different sessions (one in LTE and one in pre-LTE) identified by different TMGls. A new session will be setup when a new TMGI is allocated by the BM-SC.

Since in MBMS the same data is transmitted to many users probably located in different cells, some cells may belong to different radio access technologies (RAT) as exemplified by the UMTS and LTE network architectures introduced above. More specifically, different radio technologies support different data rates within their network areas to provide data to the mobile nodes located therein. For instance, UMTS currently supports on ideal conditions a data rate of 2 Mbps, whereas LTE are supposed to be able to provide data with a rate of up to 100 Mbps. However, under real deployment scenarios these data rates might be significantly lower, hence a realistic assumption would be a data rate for LTE multicast services which is approximately five to six times higher than the one supported by a current UMTS network technology. In our following discussions we will illustrate some embodiments of the invention based on the assumption that LTE's data rate is five times the data rate of UTMS. However, a skilled person is easily aware that this exemplary assumption imposes no restrictions to the embodiments of the invention, rather, other differences in data rates between radio access technologies are covered by the invention as well.

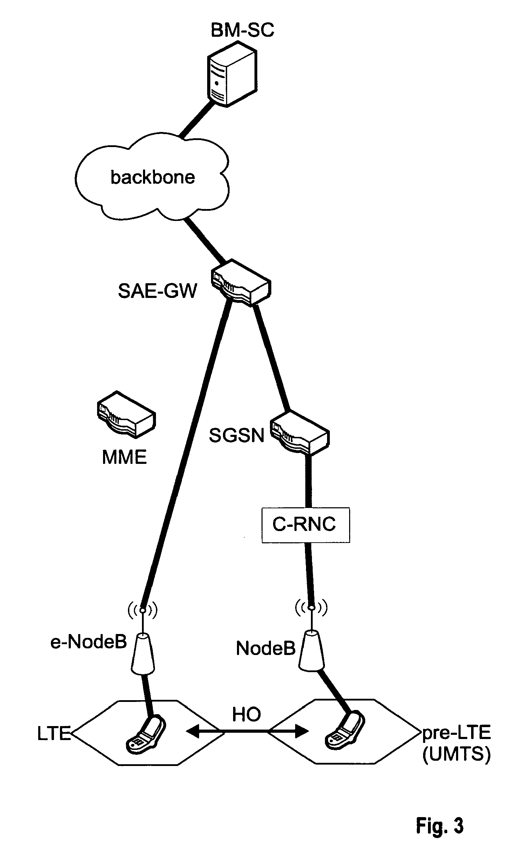

Fig. 3 shows an exemplary network architecture in which a BM-SC provides a multicast service to a mobile node which moves between an LTE and pre-LTE (UMTS) network area. The inter-RAT handover (HO) of the mobile node may be performed in both directions, that is from pre-LTE/LTE to LTE/pre-LTE. The HOs are e.g. needed for early deployment cases where the coverage of LTE system is spotty.

The SAE (System Architecture Evolution)-Gateway (GW) is provided as an interface between the two networks having different radio access technologies. It is further assumed that the BM-SC is located somewhere in the mobile communications system and is connected to the gateway via the system's backbone.

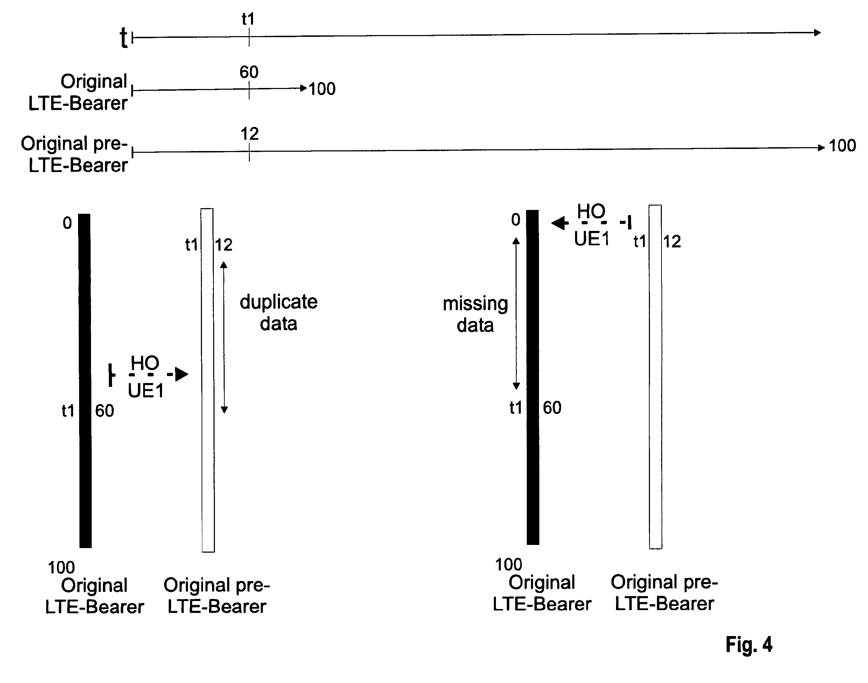

Since the two network areas provide the MBMS data at a different data provision rate, the provision of the MBMS sessions complete at different times. For example, in pre-LTE system (UMTS) the MBMS session takes about five times as much to conclude as in LTE. Consequently, when the mobile node moves between the two network areas, the handover cannot be smoothly, because the data currently provided in the new network area is different than in the network area before. For instance, in case the mobile node moves from LTE to pre-LTE there will be a duplicate transmission of data, that is, the mobile nodes will first receive duplicate data via the radio bearers of the new pre-LTE network before new service content is received. This is illustrated in Fig. 4 on the left side. In more detail, it is assumed that the mobile node performs the handover at a time t1, which yields a current progress in LTE of about 60 % and in pre-LTE of about 12 %, since radio bearers in an LTE network provide the data five times faster than in pre-LTE. Hence, when the mobile node moves within the LTE network area, it is currently at 60 % of the entire multicast service data, whereas MNs receive MBMS data corresponding to a progress of 12 % of the complete multicast service through the radio bearer in the pre-LTE network area. Apparently, when the UE performs a handover to the pre-LTE network, there will be a duplication of transmitted packets of 48 % of the MBMS session, which the MN has to wait till the pre-LTE radio bearer catches up, and the UE receives "new" data of the multicast service.

Conversely, on the right side of Fig. 4 the case is illustrated in which the MN handovers from the pre-LTE network area to the LTE network area at the same time coordinates. The gap between the current amount of data which the mobile has already received and the current progress in LTE is also 48 %, however the LTE progress this time is *ahead* of the amount of data of the mobile node at handover time. Therefore, it is not possible to wait for the LTE radio bearer to catch up, and the MN would not receive the missing 48 % of the multicast service.

For services such as Download and Play services (i.e. play content after complete download of data), the play phase of the service will be delayed due to the duplicate data download and the associated waiting time. Also, in case of missing data, the duration of the download phase increases, because of post-repair mechanisms. In detail, a post-repair mechanism analyses the completed multicast service data provision in order to detect missing data and requests the missing data from the multicast service provider (BM-SC) after the session delivery is completed. Accordingly, the post repair mechanism would at least detect the missing 48 %, and would therefore request them from the BM-SC, which in turn establishes a new bearer to transmit the requested data to the MN.

For services such as Progressive Download and Play services (i.e. content played during the download of the data), the service will be paused due to the duplicate data and the associated waiting time. Again, the missing data may only be provided at the end of the session when the post-repair mechanisms engage, and therefore the service will be even paused till the end of the provision and after the post-repair mechanism retrieved the missing data from the MBMS provider.

For individual on-session repair type solutions, network resource use is inefficient due to the number of individual bearers required because of the independent timing of the UE handoffs between the different RATs.

### SUMMARY OF THE INVENTION

An object of the invention is to suggest a mechanism for overcoming at least one of the problems outlined above. A more specific object of the invention is to improve the provision of a multicast service to a mobile node which moves between network areas that support different data rates.

At least one of the objects is solved by the subject-matter of the independent claims. Advantageous embodiments of the invention are subject-matters of the dependent claims.

According to an aspect of the invention, an improved continuous multicast service data provision is ensured by analyzing the current progress of the multicast service provision of the source network area and the one of the target network area. Accordingly, a new data channel may be established to the mobile node so as to continue with the provision without interruption.

Another aspect of the invention, that may be advantageously combined with the aspect of establishing a new data channel, refers to the reuse of system resources. Since multicast services are broadcast to a plurality of mobile nodes, it is possible that several mobile nodes receiving the same multicast service are located in the same network area. In order to efficiently use the available system resources, mobile nodes which subsequently enter a network area may also use those data channels that have already been established for previous mobile nodes, so as to continue the multicast service for the newest UE.

One embodiment of the invention provides a method for managing the continuous provision of a multicast service to a mobile node in a mobile communications system. The method is performed upon the mobile node moves from a first network area to a second network area. Further, the first network area is provided with the multicast service via a first data channel at a first data rate, and the second network area is provided with the multicast service via at least a second data channel at a second data rate. Then, it is decided whether to establish an additional data channel for the mobile node or whether to utilize one of the at least second data channels, to continue the multicast service provision to the mobile node in the second network area. This decision is based on information relating to the amount of multicast service data already transmitted in the first network area via the first data channel at the time the mobile node moves to the second network area. In case it has been decided to establish the additional data channel, system resources are configured in the mobile communications system for the additional data channel.

According to an advantageous embodiment of the invention, a third data channel in the second network area may be utilized to continue the multicast service provision in the second network area for the mobile node. In particular, the third data channel was previously established for another mobile node to continue the multicast service provision of the another mobile node in the second network area, after the another mobile node moved to the second network area. Apparently, this yields an efficient use of system resources, since subsequent mobile nodes may re-use previously established radio bearer for the service continuation.

In a more detailed embodiment of the invention the first and at least second data channels are multicast radio bearers.

Another embodiment of the invention relates to the additional data channel being a unicast or multicast radio bearer, or part of one of the at least second radio bearer. This approach allows a great flexibility to e.g. the operator of the network.

In respect to a different embodiment of the invention, in case of a unicast or multicast radio bearer, the additional channel is assigned a service identifier different than the second data channel. Also, in case the additional data channel is part of one of the at least second radio bearer, the additional data channel is assigned a different port number than the second data channel.

According to a further embodiment of the invention, the decision is further based on information about the progress of the multicast service data provision via the at least second data channel at the time the mobile node moves to the second network area.

In a another embodiment of the invention, the decision is further based on information about available system resources in the second network area, and/or based on information about the receiving capability of the mobile node, and/or based on information about the multicast service. The entity which decides can consider a lot of parameters and values, and thus the decision can be adapted to the needs and characteristics of the particular network or operator.

A more detailed embodiment of the invention relates to the fact that the decision is performed by a content synchronization entity in the mobile communications system. The content synchronization entity retrieves the information necessary for performing the decision from network entities in the mobile communications system, upon receiving an indication about the mobile node moving to the second network area. Therefore, the embodiment of the invention may be organized centrally and can thus be easily controlled.

In an advantageous embodiment of the invention the indication about the mobile node moving to the second network area is transmitted to the content synchronization entity from a mobility management entity of the mobile node. The mobility management entity is one of the first entities to learn that the mobile node performs a handover, since it is responsible for the mobility of the mobile node. This shortens the overall time for the procedure according to this embodiment of the invention.

According to a different embodiment of the invention, the indication about the mobile node moving to the second network area is transmitted to the content synchronization entity from a gateway in the mobile communications system, which provides an interface between the first network area and the second network area.

Another embodiment of the invention refers to that the first and second network areas belong to different radio access technologies supporting different data rates. Thus, the progress of the multicast service data provision in the second network area is different than the amount of multicast service data already transmitted in the first network area via the first data channel at the time the mobile node moves to the second network area.

In a more detailed embodiment of the invention the amount of multicast service data which is to be provided via the additional data channel to the mobile node is based on the amount of multicast service data already transmitted in the first network area via the first data channel at the time the mobile node moves to the second network. Therefore, the mobile node is able to seamlessly continue with its service.

According to another embodiment of the invention, the amount of multicast service data which is to be provided via the additional data channel to the mobile node is further based on the amount of multicast service data being provided via the at least second data channel. This allows to efficiently combine both provisions to save system resources. For instance, the additional data channel may only provide a limited and small amount of multicast service data, since the rest is to be provided already by the at least second data channel.

A different embodiment of the invention, relates to the configuration of system resources in the mobile communications system in case it has been decided to establish the additional data channel. In particular, a request is transmitted to a multicast service provider in the mobile communications system which provides the multicast service for requesting the establishment of a new multicast service data provision to the mobile node. Furthermore, the request includes information on the amount of multicast service data already transmitted in the first network area via the first data channel at the time the mobile node moves to the second network area and also includes information on the mobile node. Moreover, system resources are established in the mobile communications system for enabling the new multicast service data provision to the mobile node. The new multicast service data provision starts to provide multicast service data, which is chronologically at the same level as the amount of multicast service data already transmitted in the first network area via the first data channel at the time the mobile node moves to the second network area so as to continue with the multicast service data provision.

In a more detailed embodiment of the invention the mobile node is informed about the new multicast service data provision by transmitting a new multicast address, which identifies the new multicast service data provision.

According to an advantageous embodiment of the invention the configuration of system resources for the additional data channel includes the configuration of system resources in the core network of the mobile communications system for the additional data channel. Then, upon configuring the system resources in the core network, the mobile node is informed about the system resources configured in the mobile communications system for the additional data channel. This saves time, since part of the system resources are already established beforehand.

In respect to a different embodiment of the invention at least a second mobile node is provided with the multicast service via the at least second data channel in the second network area at the time the mobile node moves to the second network area. In case it has been decided to establish the additional data channel, the at least second mobile node is informed about the additional data channel. Correspondingly, the at least second mobile node receives multicast service data via the at least second data channel and simultaneously via the additional data channel. Upon completing the multicast service data provision for the at least second mobile node, the system resources in the mobile communications system for the at least second data channel are released. A possible advantage hereby is that system resources are freed due to the efficient use of the additional data channel by those mobile nodes that were originally in the second network area receiving the multicast service.

Another embodiment of the invention relates to the case when a plurality of mobile nodes, comprising the mobile node, move from the first network area to the second network area at the same time. Then, the decision is based on information about the plurality of mobile nodes and about the amount of multicast service data already transmitted in the first network area via the first data channel at the time the plurality of mobile nodes move to the second network area. Also, in case it has been decided to establish the additional data channel, the plurality of mobile nodes are informed via a broadcast channel about the system resources for the established additional channel. By using a broadcast channel instead of individually informing the mobile nodes, system resources are used efficiently.

According to a more detailed embodiment of the invention, the first data rate is higher than the second data rate, and the progress of the multicast service data provision via the at least second data channel is chronologically behind the amount of multicast service data already transmitted in the first network area via the first data channel at the time the mobile node moves to the second network area.

In an advantageous embodiment of the invention in case it has been decided to utilize the at least second data channel, it is waited till the progress of the multicast service data provision via the at least second data channel is chronologically at the same level as the amount of multicast service data already transmitted in the first network area via the first data channel at the time the mobile node moves to the second network area. Then, the mobile node receives multicast service data via the at least second data channel for continuing with the multicast service data provision in the second network area. Though the mobile node needs to wait for some time, it is possible for the mobile node to reuse already allocated system resources and to thus continue with the service provision.

According to another embodiment of the invention, the configuration of system resources in the mobile communications system in case it has been decided to establish the additional data channel is based on the amount of data already transmitted in the first network area via the first data channel at the time the mobile node moves to the second network area.

In regard to a more detailed embodiment of the invention, the decision comprises that the difference between the amount of multicast service data already transmitted in the first network area via the first data channel at the time the mobile node moves to the second network area and the progress of the multicast service data provision via the at least second data channel at the time the mobile node moves to the second network area is determined. Furthermore, the remaining amount of multicast service data for the mobile node to complete the multicast service data provision is also determined. In case the determined difference is bigger than or equal to the remaining amount, it is decided to establish the additional data channel to continue the multicast service data provision for the mobile node in the second network area. Conversely, in case the determined difference is smaller than the remaining amount, it is decided to utilize the at least second data channel to continue the multicast service data provision for the mobile node in the second network area. This is an easy algorithm wherein only few parameters need to be requested.

According to an advantageous embodiment of the invention, in case a third data channel was previously established for another mobile node to continue the multicast service provision in the second network area for the another mobile node after the another mobile node moved to the second network area, the determination of the difference instead determines the difference between the amount of multicast service data already transmitted in the first network area via the first data channel at the time the mobile node moves to the second network area and between the progress of the multicast service data provision via the third data channel at the time the mobile node moves to the second network area. Thereby, always the most current data channel is taken for the determination, which allows a more precise and efficient decision.

Another embodiment of the invention relates to the first data rate being lower than the second data rate. Thus, the progress of the multicast service data provision via the at least second data channel is chronologically ahead of the amount of multicast service data already transmitted in the first network area via the first data channel at the time the mobile node moves to the second network area.

With respect to a different embodiment of the invention in case the mobile node is the first mobile node to enter the second network area after the beginning of the multicast service data provision in the second network area, it is decided to establish the additional data channel to continue the multicast service data provision for the mobile node. Moreover, the additional data channel may be an additional multicast radio bearer. For instance, it is advantageous to establish the additional data channel as a multicast radio bearer, because thereby subsequent mobile nodes entering the second network area may benefit from this multicast radio bearer, by reusing it to continue with their own service provision.

According to a more advantageous embodiment of the invention, in case it has been decided to utilize the second data channel for continuing the multicast service data provision for the mobile node, a new unicast data channel to the mobile node is established for continuing the multicast service data provision as far as to the progress of the second data channel at the time the mobile node moves to the second network area. Then, the mobile node receives multicast service data via the second data channel and simultaneously via the new unicast data channel in order to complete the multicast service data provision for the mobile node in the second network area.

In a more detailed embodiment of the invention, the difference between the amount of multicast service data already transmitted in the first network area via the first data channel at the time the mobile node moves to the second network area and the progress of the multicast service data provision via the at least second data channel at the time the mobile node moves to the second network area is determined. Further, the remaining amount of multicast service data for the at least second data channel to complete the multicast service data provision is determined as well. Then, in case the determined difference is bigger than or equal to the remaining amount, it is decided to establish the additional data channel to continue the multicast service data provision for the mobile node in the second network area. On the other hand, in case the determined difference is smaller than the remaining amount, it is decided to utilize the at least second data channel to continue the multicast service data provision for the mobile node in the second network area. It is also decided to establish a new unicast data channel to the mobile node for continuing the multicast service data provision as far as to the progress of the second data channel at the time the mobile node moves to the second network area.

According to another embodiment of the invention, in case a third data channel was previously established for another mobile node to continue the multicast service provision in the second network area after the another mobile node moved to the second network area, the difference between the amount of multicast service data already transmitted in the first network area via the first data channel at the time the mobile node moves to the second network area and the progress of the multicast service data provision via the third data channel at the time the mobile node moves to the second network area is determined instead. Furthermore, the amount of multicast service data for the third data channel to complete the multicast service data provision is determined instead as well.

Another embodiment of the invention provides a content synchronization entity for managing the continuous provision of a multicast service to a mobile node in a mobile communications system. The mobile node moves from a first network area, provided with the multicast service via a first data channel at a first data rate, to a second network area, provided with the multicast service via at least a second data channel at a second data rate. A processor of the content synchronization entity decides whether to establish an additional data channel for the mobile node or whether to utilize one of the at least second data channels, in order to continue the multicast service provision to the mobile node in the second network area. This deciding is based on information relating to the amount of multicast service data already transmitted in the first network area via the first data channel at the time the mobile node moves to the second network area. Furthermore, the processor configures system resources in the mobile communications system for the additional channel, in case it has been decided to establish the additional data channel.

According to another embodiment of the invention, the content synchronization entity is part of a multicast service provider, which provides the multicast service, or part of a gateway, which provides an interface between the first network area and the second network area, or part of a mobility management entity of the mobile node.

In a different embodiment of the invention wherein the processor of the content synchronization entity requests the information necessary to perform the decision from network entities in the mobile communications system, upon receiving an indication about the mobile node moving to the second network area. Additionally, a receiver to receives the information.

An advantageous embodiment relates to that the processor requests the information from a multicast service provider, which provides the multicast service, and/or from a gateway, which provides an interface between the first and second network area, and/or from a radio control entity, which controls radio resources in the second network area, and/or from a mobility management entity of the mobile node.

In respect to a more detailed embodiment of the invention, the processor further bases the decision on information about the progress of the multicast service data provision via the at least second data channel at the time the mobile node moves to the second network area, and/or on information about available system resources in the second network area, and/or on information about the receiving capability of the mobile node, and/or on information about the multicast service.

According to another embodiment of the invention, in case the processor has decided to establish the additional data channel, the processor further requests a multicast service provider, which provides the multicast service, to setup an additional multicast session which is to be provided via the additional data channel, wherein the amount of multicast service data which is to be provided via the additional data channel for the additional multicast session depends on the amount of multicast service data already transmitted in the first network area via the first data channel at the time the mobile node moves to be second network.

In a further embodiment of the invention, the amount of multicast service data which is to be provided via the additional data channel for the additional multicast session further depends on the amount of multicast service data being provided via the at least second data channel.

In respect to another embodiment of the invention a receiver receives information on the additional multicast session from the multicast service provider. Also, a transmitter is informs the mobile node about the additional multicast session being provided via the additional data channel.

According to an advantageous embodiment of the invention, in case the processor has decided to establish the additional data channel, the processor decides whether the additional data channel is a separate unicast or multicast radio bearer, or whether the additional data channel is part of one of the at least second radio bearer.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows the high-level architecture of UMTS according to UMTS R99/4/5,

- **Fig. 2**: shows an exemplary architecture of the UTRAN according to the 3GPP LTE study project,
- **Fig. 3**: shows an exemplary network architecture assumed for one embodiment of the invention in which an MBMS service is provided to one LTE network and one pre-LTE network,
- **Fig. 4**: is a diagram which illustrates the differences in the progress of the multicast sessions provided in the LTE/pre-LTE network areas, and the implications for handovers between the different RATs,
- **Fig. 5**: shows an exemplary network architecture assumed for another embodiment of the invention in which a content synchronization entity is introduced for managing the continuous provision of the MBMS service after the UE performs a handover from LTE to pre-LTE,
- **Fig. 6**: illustrates a signal diagram according to one embodiment of the invention, with messages exchanged between the content synchronization entity, the BM-SC, the SAE-GW, the SGSN/MME and UE,
- **Fig. 7**: is a diagram which illustrates the setup of a new radio bearer for UE1 after performing a handover from LTE to pre-LTE, according to an embodiment of the invention,
- **Fig. 8**: is a continuation of Fig. 7 and illustrates how UE2 continues with the MBMS service by reusing the radio bearer previously established for UE1, after UE2 performs a handover from an LTE network to the pre-LTE network of UE1, according to another embodiment of the invention,
- **Fig. 9**: is a continuation of Fig. 8 and illustrates the setup of another new radio bearer for UE3 after performing a handover from an LTE network to the pre-LTE network of UE1 and UE2, according to one embodiment of the invention,
- **Fig. 10**: shows an exemplary network architecture assumed for a different embodiment of the invention in which a content synchronization entity is introduced for managing the continuous provision of the MBMS service after the UE performs a handover from pre-LTE to LTE,
- **Fig. 11**: is a diagram which illustrates the setup of a new multicast radio bearer for UE1 after performing a handover from pre-LTE to LTE, according to an embodiment of the invention,
- **Fig. 12**: is a continuation of Fig. 11 and illustrates how UE2 continues the MBMS service by reusing the radio bearer previously established for UE and by setting up a new unicast radio bearer for the missing data, after UE2 performs a handover from a pre-LTE network to the LTE network of UE1, according to another embodiment of the invention,
- **Fig. 13**: is a continuation of Fig 12 and illustrates the setup of another new multicast radio bearer for UE3 after performing a handover from a pre-LTE network to the LTE network of UE1 and UE2, according to another embodiment of the invention, and
- **Fig. 14**: shows a signal diagram for another embodiment of the invention, in which the bearer setup is accelerated by allocation system resources a priori.

### DETAILED DESCRIPTION

### Definitions

In the following a definition of a few terms frequently used in this document will be provided.

A **mobile node** is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or correspondent nodes.

A **data channel** is any channel via which data is provided to the mobile node. This may inter alia include multicast radio bearers or unicast radio bearers. Alternatively, the data channel may be part of a radio bearer that is already present in the network area. In said case, a different port number is used for the data channel to differentiate it against the original data channel on the original radio bearer.

The following paragraphs will describe various embodiments of the invention. For exemplary purposes only, most of the embodiments are outlined in relation to a 3GPP-LTE and UMTS communication system according to the discussion in the Background Art section above and later on. It should be noted that the invention may be advantageously used for example in connection with a mobile communication system such as the 3GPP-LTE and UMTS communication system, but the invention is not limited to its use in this particular exemplary communication network.

The explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures/systems described in the Technological Background section and may in some embodiments of the invention also make use of standard and improved procedures of theses architectures/systems.

A first aspect of the invention assumes that a mobile node is first located in a first network area in which the multicast service is provided via a channel at a specific data rate. Subsequently, the mobile node moves to another network area in which the multicast service is provided as well via another multicast session. However, the session is provided in the new network area at a different data rate than before. Therefore, the progress of the multicast service provisions in the old and new network area are different at the moment of handover of the mobile node. According to the prior art, the mobile node would have to either wait till the new data channel catches up with its progress of the multicast service data provision, in case the data rate in the old network area is higher than in the new network area. Or, in case the data rate in the old network area is lower than in the new network area, the mobile node would not be able to retrieve the missing data until the end of the service provision, when post-repair mechanisms engage to provide the missing data.

On the other hand, according to one embodiment of the invention, at the time of handover of the mobile node to the new network area it is decided whether to establish an additional data channel in the second network area so as to continue with the multicast service provision to the mobile node. The decision may be taken based on various kind of information and algorithms, selected e.g. by a network operator. For instance, the decision for the additional channel in the new network area may be based on the progress of the multicast service provision in the old network area at the time when the mobile node leaves the source network area. In detail and assuming a handover from an LTE to a pre-LTE network, the additional data channel is only configured for later stages of the multicast service provision, since in the early stages the UE can wait until the multicast service provision for the mobile node in the pre-LTE network area catches up and reaches the same progress the mobile node is currently at.

In said respect, a Content Synchronization Entity (CSE) is provided in the mobile communications system to perform the above described service content synchronization for mobile nodes that perform handovers to/from pre-LTE/LTE network architectures. This CSE is informed about session progress at handover of the mobile node and will decide whether a new data channel is necessary for the mobile node to do "on-line repair". The term "on-line repair" is used in the following to refer to the process of deciding about / establishing the additional data channel to ensure the seamless provision of the multicast service after handover.

The CSE will coordinate with the service provider in order to allow the UE, which performs the HO, to continue receiving the service content without interruptions. This implicates that the CSE will first request the BM-SC and other entities (e.g. Home Subscriber Server (HSS) or SAE-GW) in the network for session parameters, in order to evaluate whether or not to request the setup of a new data channel for the mobile node. Subsequently, provided that the result of the decision is indeed to setup a new data channel, the CSE will request the BM-SC to setup the new data channel to the UE by requesting a new session to be started from the point in time indicated by the CSE to the BM-SC. This session may be called online-repair session as already mentioned above. In other words, the online-repair session starts with the provision of data from the progress at the time of handover, which naturally coincides with the amount of service data the UE is currently in possession of.

There are several advantages that stem from the continuous provision of the multicast service. For example, the waiting time of the mobile node for new content of the service is reduced. Also, the quality of experience for the user is enhanced, since the waiting time is reduced and no/fewer interruptions take place. Furthermore, the battery consumption is reduced, because of the reduced waiting time. As will be explained in detail farther below, the resources of the system are used more efficiently as well. This latter advantage concerns the reuse of system resources by other UEs that also handoff to the new network area, and may simultaneously use the already established additional data channel of a previous UE.

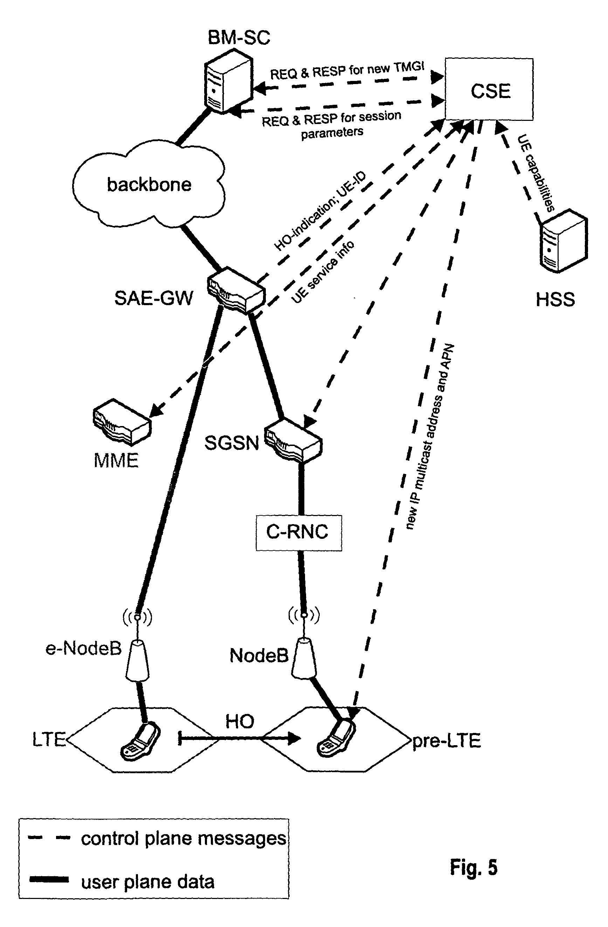

In the following only the case of LTE to UMTS handover is considered, wherein the opposing case is addressed later. The first case is illustrated in Fig. 5, in which an MBMS service is provided from a BM-SC to two separate network areas which implement different radio access technologies, e.g. LTE and pre-LTE. According to an embodiment of the invention, a Content Synchronization entity is provided in the system which is constantly informed about mobile nodes that perform inter-RAT handover, like in this case depicted in Fig. 5. In said respect, there are several possibilities of how to inform the CSE. In Fig. 5 it is assumed that the SAE-GW transmits an indication to the CSE about the handover of the UE. However, it should be noted that other network entities in the system are also aware of the handover of the UE, and may thus notify the CSE correspondingly. For instance, the MME knows about the handover, because it is notified by the source eNBs (with a relocation request message) so as to prepare resources in the target eNB or NodeB as part of the mobility management procedure. Messages corresponding to the control plane are depicted in Fig. 5 with dashed lines, whereas the data exchange relating to the user plane (and thus to the MBMS service data) is drawn with solid lines. Apparently, the invention according to the embodiments of the invention belongs to the control plane.

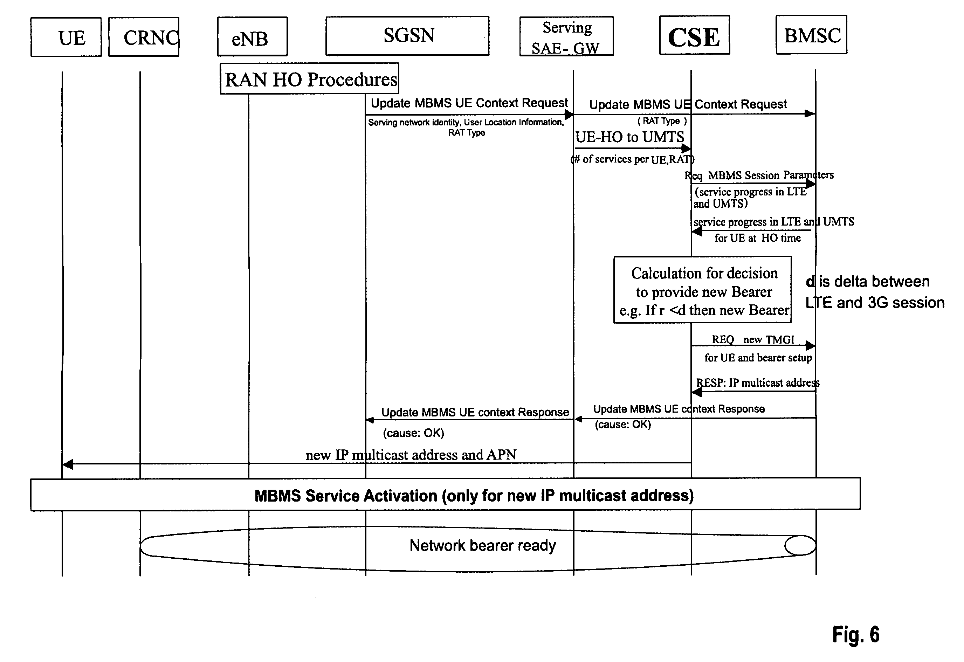

Fig. 6 shows a more detailed message chart of the complete handover procedure according to the embodiment of the invention. After the mobile node moves to the pre-LTE network area, usual RAN handover procedures are performed with the SGSN, as for example, the decision to perform handover is taken by the source eNB, subsequently requests for relocation messages and responses are generated to the MME and forwarded to target SGSN in order to prepare the UTRAN resources prior to issuing a handover command to the UE. Subsequently, MBMS UE contexts have to be updated for the remaining network, including the SAE-GW and the BM-SC. In this respect, an Update MBMS UE Context Request message is transmitted from the SGSN to gateway, which in turn forwards the Update message to the BM-SC. MBMS UE Context shall be updated when the UE enters a new Routeing Area (RA) served by a new SGSN or when the UE is transitioning between LTE and pre-LTE networks or vice versa. The SAE-GW shall pass the relevant data via the Gmb interface to enable the BM-SC to update its MBMS UE context accordingly stating the cause of the update (i.e. new RA or RAT). The BMSC should use this to verify for example, whether the UE is authorized to receive content in the new access system, etc. The gateway and BM-SC can therefore update the MBMS UE Context fields with the information included in the received message. The gateway updates information relating to the serving network entity, the user location information and the new RAT type, whereas the BM-SC is only informed about the new RAT type.

Moreover, the CSE is informed about the inter-RAT handover of the UE by the SAE-gateway, which advantageously also includes information about the number of services of the UE and about the new RAT type. The CSE could utilize a wide array of parameters to base its decision about the establishment of a new data channel for the UE. The following table is only an extract of possible parameters, and is not to be understood as limiting. Rather, a skilled person may think of other parameters on which the decision of the CSE can be based.

| **Parameter Origin** | **Information** |
|---|---|
| **Radio Level Parameters** | |
| SAE-GW | HO indication for UE (after MBMS update msg. arrives) which includes RAT types |
| O&M Pre-configured at CSE | Cell ID (cells in areas easily affected by movement of UEs to/from LTE) |
| CRNC | Cell-ID to which the UE is moving to (requested by CSE) |
| CRNC | Maximum number of bearers per cell (PTP and PTM) |
| CRNC | Number of users in specific UMTS cell per TMGI |
| | |

| **Service Level Information** | |
|---|---|
| BMSC | Session duration "L" per RAT (maybe derived from data rate and file size) |
| BMSC | IP multicast address and APN: TMGI |
| SGSN | Number of services received by UE |
| CSE derived | r and d parameters, where r: remaining of the session and d is the delta in content between the two RATs |
| HSS | UE capabilities |
| O&M | Maximum waiting time for UEs |

As apparent from above, all the parameters are available within the core network, that is, the UE does not need to be requested for information. Hence, this leads to no additional traffic over the air interface. However, this should not be understood as that the CSE *cannot* retrieve/request information from the UE, according to the invention.

Based on several of the above parameters the following algorithm may be employed to make the decision for an additional data channel for the UE.
1. Session duration: compare whether the complete session length is worthy of doing an online-repair, e.g. a long video newscast compared to a 2 minutes clip, this length of session is an operator controlled parameter to trigger the mechanism with consideration of some threshold,
2. Check if maximum waiting time for the UE is < or > than d then,
3. Check UE capabilities info (referred at authorization at BM-SC), if UE can receive several MBMS bearers simultaneously then,
4. Check number of services currently received by the UE, then
5. Check informed cell-ID where UE is going to HO in UMTS,
6. Check maximum number of bearers in that cell (cell capacity) to see if it is possible to setup new bearer, then
7. Check number of users in specific cell-ID where the UE is going to HO (this part can be optional at the CSE and may be left to CRNC to decide)

If the above conditions apply, then the CSE decides to setup a new bearer (whether PTP or PTM is up to the operator) and will request the BM-SC to assign a new TMGI for the online-repair session.

However, for the sake of simplicity, the procedure as shown in Fig. 6 (and in the following figures) only covers the case when the parameters r and d are utilized to make the decision, and ignores other possible input parameters. As apparent, the CSE requests information from the BM-SC about the progress of the MBMS session in the source network area (LTE) and in the target network area (UMTS). Correspondingly, the BM-SC responds with the requested information, which enables the CSE to calculate values r and d, necessary for the decision about the additional data channel for the UE.

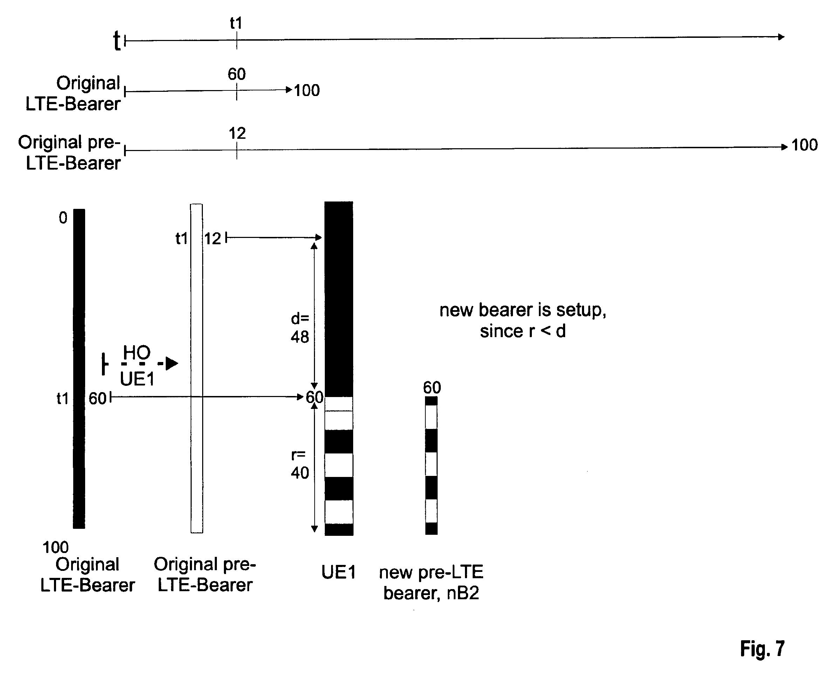

The definition of parameters r and d is explained in more detail with respect to Fig. 7. Fig. 7 shows a timing diagram where the different progress of the LTE and UMTS radio bearer for providing the MBMS service are depicted. More specifically, in the upper part of the figure a timescale is provided to directly illustrate the difference in session progress between LTE and pre-LTE network areas. It is assumed that the mobile node handoffs at a time t1 from LTE to UMTS, wherein the current progress in the old network area (LTE) is at 60 %. Assuming that LTE's data rate is five times as high as the UMTS data rate, the progress of the UMTS radio bearer is thus at 12 %. Therefore, UE1 already has received 60 % of the entire MBMS service, however the radio bearer in the new network area is significantly behind the LTE bearer. The difference is d and amounts to 48 % as apparent from the figure. Correspondingly, the UE1 needs 40 % to complete the MBMS service. This remaining amount of data for the UE1 to complete the MBMS service is denoted r. After having calculated r and d, the CSE compares both parameters and in case r<=d decides to setup a new session and a corresponding new data channel. Since r=40% and d= 48%, r is indeed smaller than d, and thus a new MBMS session and associated new data channel may be setup, as illustrated in Fig. 7. The data channel needs to provide service data from 60 % on to the UE till the end of the MBMS session.

Depending on network resources and/or operator preferences, the new data channel may be either a multicast channel or a unicast channel, i.e. multicast or unicast radio bearer. For instance, a unicast channel may be advantageous in cases where the progress of the MBMS service data already received by the mobile node is advanced (e.g. 90 %). That is, the additional channel starts to provide data from 90 % to 100 % for the UE, which implicates that it is not efficient for the network to establish a multicast radio bearer, since other UEs are not likely to benefit in reusing a possible new bearer for such a short period of time and/or enter the target network area within those 10 %. On the other hand, in cases where the MBMS service just started, a new data channel may be configured as multicast, because other UEs can still move to the target network area and benefit from the multicast radio bearer. In summary, the CSE may decide which kind of new data channel to setup based on several considerations, e.g. like above, and may then instruct the BM-SC accordingly.

The setup of a new data channel will be described while referring back to Fig. 6. As apparent therefrom, it is assumed that r<d, and therefore the CSE starts to establish the online-repair session by requesting a new TMGI for the UE from the BM-SC. The online-repair session will thus use an additional radio bearer in the target network area to provide the service to the UE. The BM-SC responds with a new multicast address and APN so as to establish a new radio bearer in the mobile communications system.

The BM-SC updated in the mean time its UE contexts and transmits a response message to the SAE-GW in said regard. The Update MBMS UE Context Response message from the BM-SC will indicate that the cause is OK if everything goes well. Similarly, upon receiving the Response message from the BM-SC, the SAE-GW forwards the message to the SGSN.

Regarding the embodiment of the invention, the CSE informs the UE about the new service session by transmitting the corresponding new IP multicast address and the relevant APN, so that the UE may receive the new service content via the new radio bearer. This also implicates that the MBMS service activation is performed for the new IP multicast address. Resulting therefrom, the UE now receives a new service via the new radio bearer, which is actually a continuation of the original MBMS service received in the old network area. This is illustrated in Fig. 7, wherein the UE1 completes the session with the data provided by the new pre-LTE radio bearer, nB2. Therefore, after handing over to the new network area, the mobile node continues with the MBMS service by listening to a newly established multicast radio bearer and avoids service interruptions or delays.

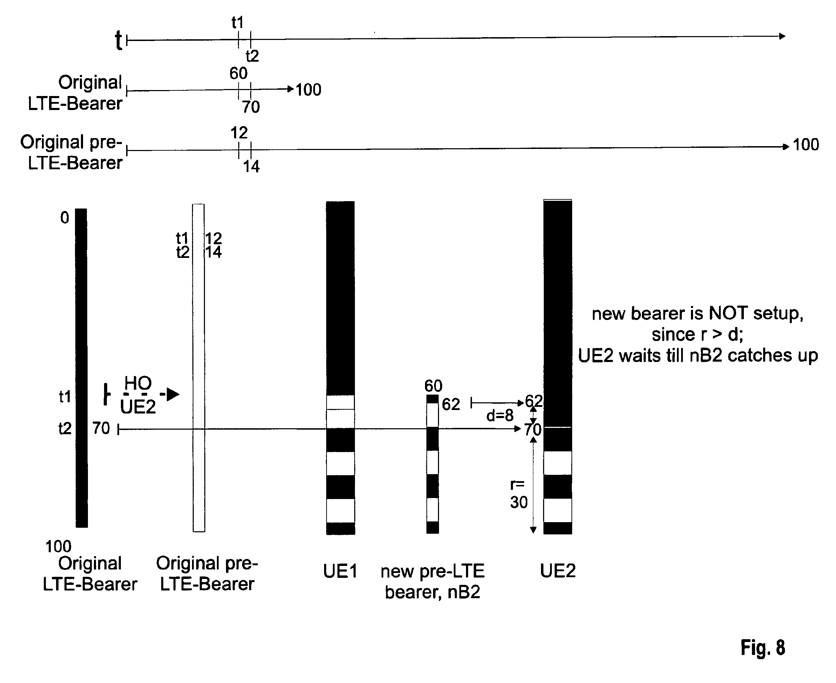

In the following, the logic is described when subsequent UE handovers take place from LTE to pre-LTE. In said respect, Fig. 8 is a continuation of Fig. 7, namely for the case in which another UE2 enters the network area after the first UE1 entered the network area, and a corresponding multicast radio bearer nB2 was established to ensure the seamless provision of the MBMS service to UE1. UE2 is assumed to perform the handover at a time t2, wherein at that time the pre-LTE provision is at 14 % and the LTE provision at 70 % of the entire MBMS service. According to another embodiment of the invention, if nB2 for UE1 was setup as a point-to-multipoint radio bearer, the logic, as discussed in relation to Fig. 7, can be extended so as to consider the r and d values for UE2 with respect to the service progress of nB2, the newest radio bearer, instead of with respect to the original point-to-multipoint service that is on-going in the pre-LTE network. The newly established radio bearer nB2 is at the moment of the UE2's handover at 62 %, because 2 % were already provided in the mean time since time t1. Bearing that in mind, this results in that the value d amounts to 8 % and r to 30 %, as illustrated in Fig. 8. Consequently, no additional radio bearer is established, since r>d, and the UE2 can wait 8% for the radio bearer nB2 to reach the same progress level as UE2, which was the progress of the LTE source network of UE2 at time of handover. Therefore, the newly established radio bearer nB2 is reused, and there is no need to request a new TMGI. The CSE will only notify the new UE2 about the IP multicast address of nB2 to activate the already established MBMS service for UE2.

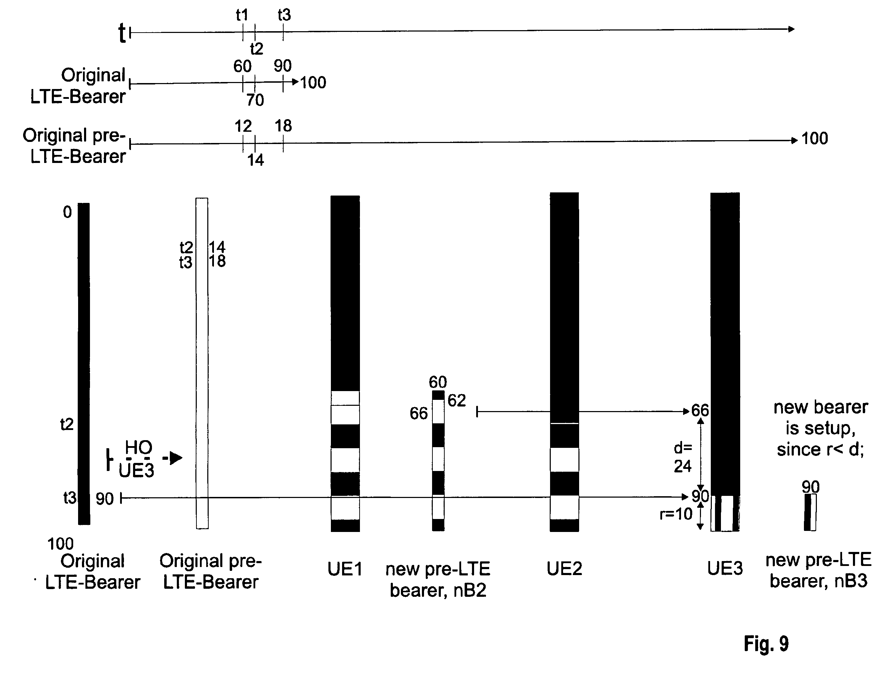

Similarly, the CSE may also decide for further subsequent UEs whether another data channel is necessary to ensure the efficient and continuous provision of the MBMS service. Fig. 9 is based on Fig. 7 and 8, and relates to the case where a third UE3 enters the network area, while UE1 and UE2 are still receiving the MBMS service via the previously established additional PTM radio bearer, nB2. UE3 moves to the network area at a time t3, which corresponds to an amount of MBMS service data of 18 % in pre-LTE and 90 % in LTE. Again, the CSE compares the session progress of the LTE source network to the most newly established bearer in the new RAT in order to determine if the setup of another bearer for UE3 is necessary. In more detail, nB2 currently provides session data corresponding to 66 % of the entire MBMS service, because 4 % (6%) passed by since t2 (t1). Therefore, the value of d amounts to 24 %, while the remaining data for UE3 to complete the MBMS service is only 10 %. Consequently, the CSE decides to establish a new radio bearer to provide the remaining 10 % of the MBMS session to UE3, instead of waiting 24 % till nB2 reaches a progress level which would provide the UE3 with new MBMS service data. In a similar way like above, the CSE will request the BM-SC to assign a new TMGI for the new online-repair session. The new radio bearer may either be a PTP or PTM bearer depending on the operator's judgment. In this case, a PTP bearer might be more resource-saving, since only 10 % are provided, and probably no other UE will enter the network area till the end of the MBMS service.

After receiving a new TMGI from the BM-SC, the CSE informs the UE about the new MBMS session, respectively new radio bearer, including information on the new IP multicast address and the new APN. Subsequently, the UE starts the service activation for the new TMGI, and the normal MBMS procedures for bearer setup take place.

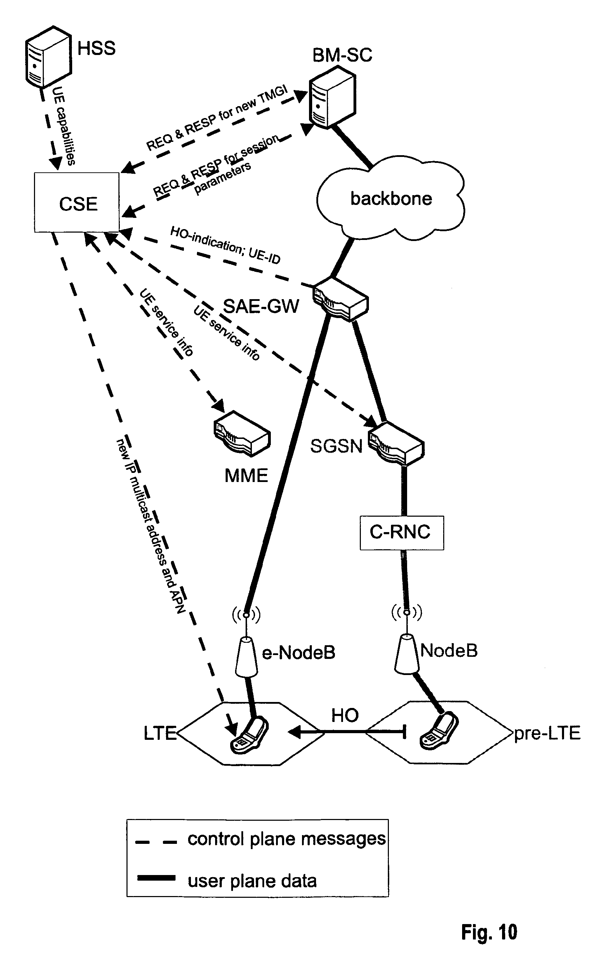

Another embodiment of the invention relates to those cases in which the mobile node moves from pre-LTE to LTE networks, as illustrated in Fig. 10. The procedure according to this embodiment of the invention is very similar to the previous one in respect to Fig. 5-9.

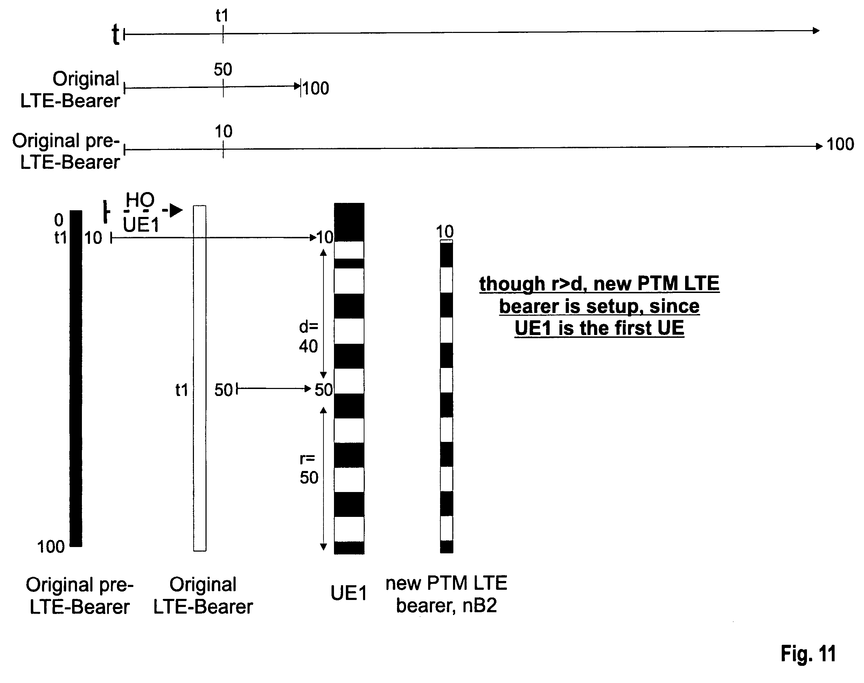

For instance, Fig. 6 partly coincides with the procedure before, except for some minor differences which we will refer to in the following. The Update MBMS UE context Request message is transmitted from the MME instead of from the SGSN. Furthermore, the algorithm of the CSE used for deciding about the new data channel differs, this being explained in regard to Fig. 11. However, it should be again noted that the algorithm for deciding can vary, and may depend on various parameters not considered in this example.

In particular, it is assumed that the handover of UE1 takes place at the time t1 which implies that the pre-LTE radio bearer currently provides data corresponding to a 10 % progress of the entire MBMS service. Correspondingly, the LTE radio bearer transmitted data up to 50 % till t1. As a result therefrom, there is a gap d of 40 % with missing data, since the UE1 received only 10 % until the handover whereas the LTE bearer in the target network is already broadcasting data corresponding to a progress of 50 %. The remaining data for UE1 to complete the MBMS session is now determined in relation to the progress of the LTE bearer in the new network at the time of handover, and thus r is 50 %. Since UE1 is the first UE to enter the target network after the MBMS service started, the fact that r>d is ignored. Rather, a multicast radio bearer is always setup in an LTE network for the first mobile node that handoffs from a pre-LTE network to said specific LTE network with an on-going MBMS session.

Consequently, CSE decides to establish a new MBMS session and new data channel for UE1, and correspondingly requests a new TMGI from the BM-SC. The BM-SC responds with a new IP multicast address and the new APN. The CSE can now inform the UE1 about the new radio bearer by transmitting the IP multicast address and the APN to UE1. Subsequently, UE1 starts the MBMS activation for the new IP multicast address.

Upon completion of the radio bearer establishment, UE1 can receive the remaining 90 % from the newly established PTM radio bearer nB2 and concludes the MBMS service.

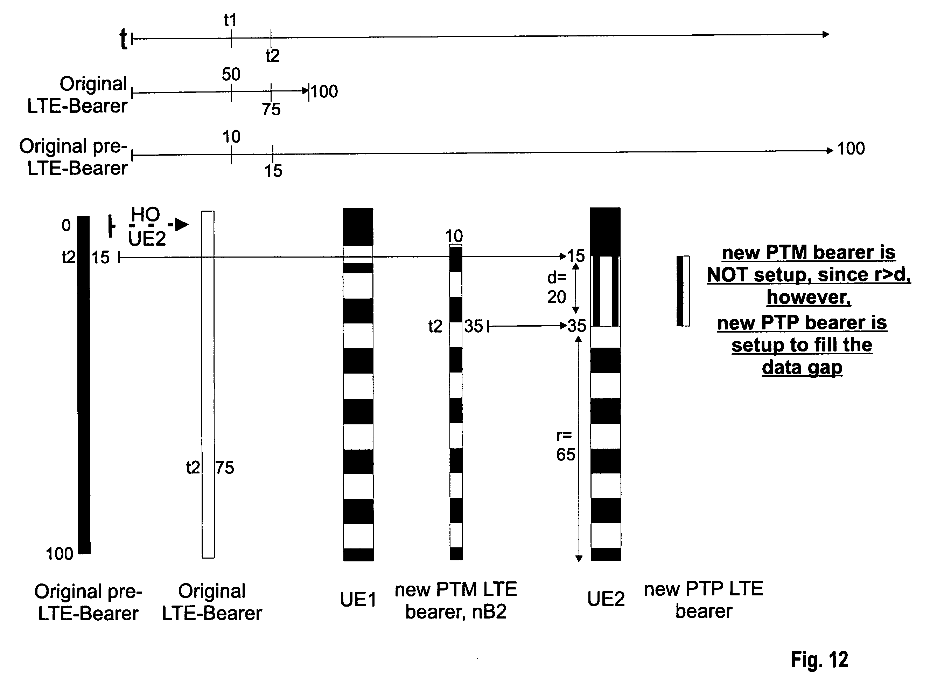

Fig. 12 shows the continuation of Fig. 11, namely when a second mobile node UE2 enters the network area. In said case, the CSE is also informed about the handover, wherein the CSE then starts to retrieve valuable information from the network entities. As apparent from the figure, the handover takes place at t2, which means that the progress of the MBMS session provision at that time is 15 % in pre-LTE and 75 % in LTE, in relation to the entire MBMS service. Therefore, when UE2 moves from a pre-LTE network to the LTE network in which an additional radio bearer nB2 was already established for UE1, the value d is calculated with reference to the current progress of the most newly established radio bearer nB2. In particular, from t1=10 to t2=15 the previously established LTE PTM bearer nB2 proceeded with the provision at a data rate corresponding to an LTE system. This implies that the radio bearer nB2 provided in the mean time 5*5 %, and is therefore currently transmitting service data which corresponds to a progress of 35 % of the entire MBMS session. Consequently, value d amounts to 20 %, and the remaining amount of data r to complete the provision via the newly established radio bearer is 65 %.

Because UE2 is not the first UE to enter the network area since the MBMS service started, CSE needs to determine whether r<d. Only when r<d will the CSE decide for a new radio bearer to ensure the continuous provision of the multicast service for UEs in the LTE network area. Hence, since in case of Fig. 12 r>d, it is decided by the CSE that no PTM radio bearer shall be established. Rather, UE2 shall reuse the previously established radio bearer for UE1, nB2, to continue the MBMS service data provision. In addition, another PTP bearer is necessary to fill the data gap between the current amount of data of the UE2 and the current MBMS service progress of nB2 in the network area. That is, the data from 15 % to 35 % will not be available for the UE2, as nB2 will provide data from 35 % on forward. Therefore, a PTP bearer for only those missing 20 % would be necessary. In order to establish the PTP bearer, the CSE which is aware of the missing data, requests the missing data from the BM-SC by establishing a new session for only UE2. Alternatively, if this gap of missing data is significantly small (which happens when the handover takes place at the very early stages of the MBMS provisions) UE2 can be made to loose said data. However, even a relatively small gap can negatively affect the user experience, hence, the above PTP bearer for filling the gap advantageously circumvents said problem.

Moreover, after having established the PTP bearer, the UE2 is enabled to receive service data from the PTP bearer to immediately proceed with service, that is from 15 % to 35 % of the session. Also, provided that UE2 is capable to simultaneously receive data from two radio bearers, UE2 will receive at the same time service data via the PTM radio bearer nB2, such that when the UE2 reaches to play 35 % of the service, new content (36 % - 56 %) is already available in the buffer to be used for the playing of the service to the user. This is illustrated in Fig. 12.

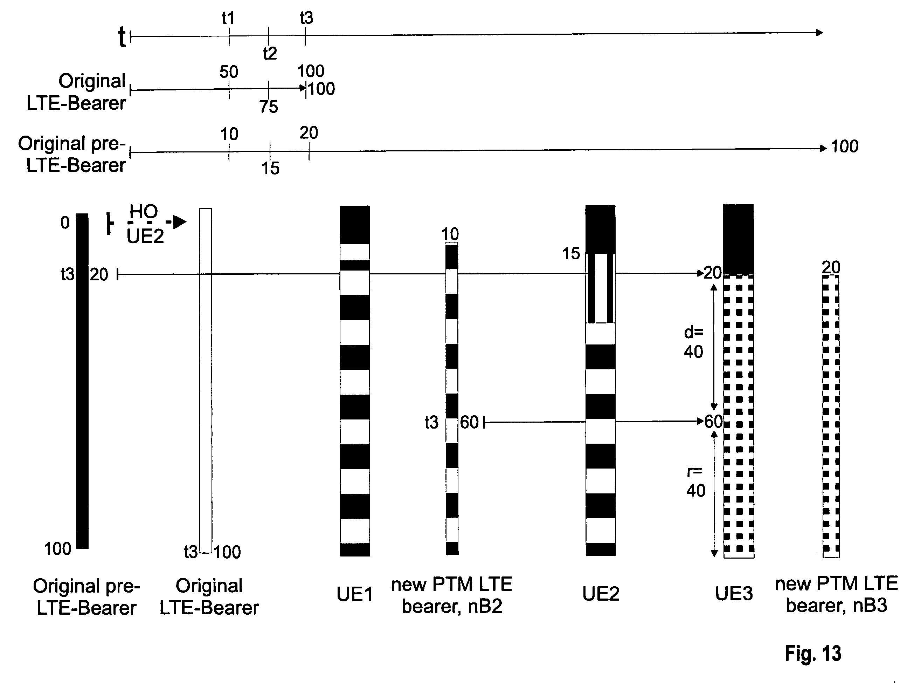

The same procedure as above applies to subsequent UEs as well. For instance, it is further assumed that UE3 handoffs to the same network area as UE1 and UE2 before. UE3 was previously located in an UMTS network, and at the time t3 the UMTS radio bearer was providing data corresponding to a progress of 20 % of the complete MBMS service, as apparent from Fig. 13. Correspondingly, when UE3 enters the LTE network, the MBMS service provision just finished, 100 %. Furthermore, the progress of the previously established radio bearer for UE1 proceeded since t2 from 35 % to 60 % (+5*5%). Consequently, the value of d is 40 %, and r is 40 % as well. As a result, CSE decides that a new data channel is to be established since r<=d. As before, CSE may request a new TMGI from the BM-SC for providing the remaining 80 % (20 % - 100 %) of the MBMS service to UE3. After receiving the corresponding IP multicast address and APN for the new radio bearer from the BM-SC, the CSE informs the UE, which in turn starts the MBMS service activation for the new TMGI.

There are several alternatives which may be used instead of or in addition to the above discussed embodiments of the invention.

For instance, there is also the possibility to utilize a single TMGI for the online-repair sessions of all the UEs that handoff to the new network having a different RAT than before. This may be achieved by requesting the BM-SC to transmit the repair session utilizing a different port number on an already present radio bearer, instead of establishing a completely new radio bearer. That is, the CSE instructs the BM-SC to establish a new MBMS session while utilizing e.g. the original radio bearer in the network. The TMGI (which is the same as the one belonging to the original radio bearer) and the new port number that will be used to distinguish the service data of the new MBMS service, are transmitted from the CSE to the mobile node. Moreover, the data of the new MBMS session, as indicated by CSE, is transmitted from the BM-SC to the eNB/CRNC, which in turn multiplexes the data onto the original radio bearer by using a different port number than is currently used by the data transported on the original radio bearer. Correspondingly, the UE, knowing the different port numbers, is able to demultiplex and thus identify the service data belonging to the newly established MBMS session. Consequently, the UE may use said data of the new MBMS session to continue with the provision of the original MBMS session. This alternative embodiment may be applied in combination to all other embodiments of the invention.

Also, an enhancement to above embodiments of the invention is possible for cases in which a group of UEs simultaneously handover to the same network area. In particular, e.g. passengers in trains leave and enter the same network areas at approximately the same time. The CSE receives an indication from e.g. the SAE-GW about the group of UEs handing over to the new network area. The CSE is informed about the target cell-ID by the CRNC (in case of LTE to pre-LTE) and checks it. Subsequently, the CSE will request parameters from network entities in order to evaluate a possible setup of a new radio bearer. For instance, some session parameters may be retrieved from the BM-SC. Furthermore, in case a new data channel is to be established, the BM-SC is requested by the CSE to setup a new MBMS service with a new multicast radio bearer. Consequently, upon allocating a new TMGI, the group of UEs has to be informed about the mapping of the new TMGI in the pre-LTE/LTE network. Advantageously, instead of signaling this for each UE individually, the CSE requests the notification about the mapping of the new TMGI to be transmitted to the UEs on a broadcast channel.

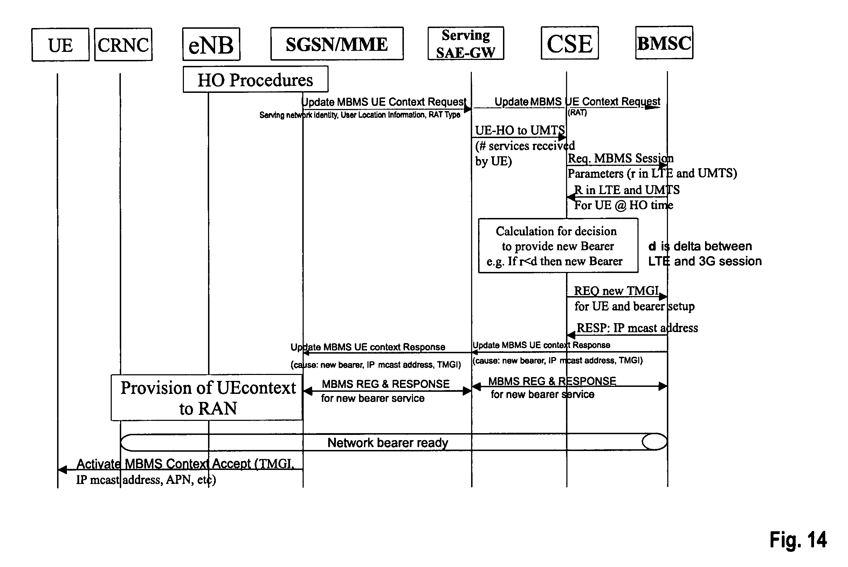

Another advantageous embodiment of the invention improves the setup of the bearers in the mobile communications system, by establishing the system resources in the core network a-priori, instead of waiting for the MBMS activation procedure which is started by the UE. In particular, when there is a handover to pre-LTE systems, there is the need to tell the UE to activate the MBMS procedure for the new TMGI that is allocated for the online-repair mechanism (in Fig. 6, message from CSE to UE). Hence, the setup of the MBMS bearer takes place after this notification, which adds some delay to the overall procedure. One variant to mitigate said problem is to utilize the MBMS procedure of MBMS Registration Response. This is illustrated in Fig. 14. After the CSE decides to utilize an additional session and data channel to ensure the seamless provision of the MBMS service to the UE, it requests a new TMGI from the BM-SC on behalf of the SAE-GW. Correspondingly, the BM-SC responds with the new allocated IP multicast address and includes in the response of the respective MBMS UE context request as the cause of parameter setup the new bearer. As the downstream nodes (SAE-GW, SGSN) do not have the MBMS Bearer Context information for this new MBMS bearer, the SAE-GW sends a MBMS Registration Request to the BM-SC. Upon reception of an MBMS Registration Request from a SAE-GW, the BM-SC Proxy and Transport function adds the identifier of the SAE-GW to the "list of downstream nodes" parameter in its MBMS Bearer Context and responds with a MBMS Registration Response (TMGI, Required Bearer Capabilities) message. As the MBMS Bearer Context is in the 'Active' state, the BM-SC initiates the Session Start procedure with the SAE-GW immediately. Finally, when the UE receives the Activate MBMS Context Accept message, there are already network resources setup for the new bearer service identified by the new TMGI. The radio bearer is setup by the CRNC after the provision of UE context to the RAN, when the session start message from BM-SC is sent to SAE-GW, then from SAE-GW to SGSN and to CRNC.

Another enhancement of the above embodiments of the invention refers to the use of the newly established radio bearers by those UEs that were originally in the network area receiving the MBMS service. This advantageous embodiment however only applies for those UEs that are able to simultaneously receive data from different point-to-multipoint bearer. In particular, we assume that there are already some UEs receiving the MBMS service in the network area to which a UE moves. Therefore, in case there is a HO of a UE from LTE to pre-LTE, the CSE may decide to establish a new multicast radio bearer to continue the MBMS provision for the UE in the new pre-LTE network area, as exemplified in Fig. 7. Then, it is advantageous to indicate to those UEs that were camping in the pre-LTE area since the beginning of the session, to also receive information about the new radio bearer for the UE that entered from LTE. Consequently, those UEs originally camped in the pre-LTE area can simultaneously receive service data via the original pre-LTE radio bearer and via the newly established radio bearer for the new UE (in Fig. 7, nB2). That is, explicitly referring to the example in Fig. 7, the UE(s) that were originally camped in the pre-LTE area can receive an amount of data corresponding to 12% to 60 %, which is as total amount of 48 %, via the original radio bearer. Furthermore, those UEs may simultaneously receive from 60 % to 100 % of the entire MBMS service via the newly established radio bearer nB2. Thus, while receiving the 48 % via the original radio bearer, the UEs have already downloaded the remaining 40 % (60 %- 100% of the MBMS service) via nB2. Therefore, their reception time is shortened by the time it takes to download the 40 % of the MBMS service. Additionally, the PTM bearer resources used for the original pre-LTE radio bearer may be freed up earlier. A skilled person may notice that this mechanism can be also applied to any further PTM bearer that might be additionally established due to the mobility of other UEs that perform a handover from an LTE network to the same pre-LTE network. However, this optimization is limited by the number of PTM bearers that can be simultaneously transmitted in the pre-LTE system.

Further, as already briefly mentioned above it is to be noted that the concepts of the invention outlined in various exemplary embodiments herein may be advantageously used in a mobile communication system as described in the Technological background section that may for example have an architecture as exemplified in Fig. 1 or Fig. 2.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

It should be further noted that most of the embodiments have been outlined in relation to a 3GPP-based communication system and the terminology used in the previous sections mainly relates to the 3GPP terminology. However, the terminology and the description of the various embodiments with respect to 3GPP-based architectures is not intended to limit the principles and ideas of the inventions to such systems.

Also the detailed explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures described in the Technological Background section. Furthermore the concept of the invention may be also readily used in the LTE RAN currently discussed by the 3GGP.

## Claims

1. A method for managing the continuous provision of a multicast service to a mobile node in a mobile communications system, upon the mobile node moving from a first network area, provided with the multicast service via a first data channel at a first data rate, to a second network area, provided with the multicast service via at least a second data channel at a second data rate, the method comprising the steps of:
deciding, based on information relating to the amount of multicast service data already transmitted in the first network area via the first data channel at the time the mobile node moves to the second network area, whether to establish an additional data channel for the mobile node or whether to utilize one of the at least second data channels, to continue the multicast service provision to the mobile node in the second network area, and
in case it has been decided to establish the additional data channel, configuring system resources in the mobile communications system for the additional data channel.

2. The method of claim 1, wherein a third data channel in the second network area may be utilized to continue the multicast service provision in the second network area for the mobile node, wherein the third data channel was previously established for another mobile node to continue the multicast service provision of the another mobile node in the second network area after the another mobile node moved to the second network area.

3. The method of claims 1 or 2, wherein the first and at least second data channels are multicast radio bearers.

4. The method of claim 3, wherein the additional data channel is a unicast or multicast radio bearer, or part of one of the at least second radio bearer.

5. The method of claim 4, wherein in case of a unicast or multicast radio bearer, the additional channel is assigned a service identifier different than the second data channel, and in case the additional data channel is part of one of the at least second radio bearer, the additional data channel is assigned a different port number than the second data channel.

6. The method of one of claims 1 to 5, wherein the step of deciding is further based on information about the progress of the multicast service data provision via the at least second data channel at the time the mobile node moves to the second network area.

7. The method of one of claims 1 to 6, wherein the step of deciding is further based on information about available system resources in the second network area, and/or based on information about the receiving capability of the mobile node, and/or based on information about the multicast service.

8. The method of one of claims 1 to 7, wherein the step of deciding is performed by a content synchronization entity in the mobile communications system, and the method further comprises the step of:
retrieving by the content synchronization entity the information necessary for performing the step of deciding from network entities in the mobile communications system, upon receiving an indication about the mobile node moving to the second network area.

9. The method of claim 8, wherein the indication about the mobile node moving to the second network area is transmitted to the content synchronization entity from a mobility management entity of the mobile node.

10. The method of claim 8, wherein the indication about the mobile node moving to the second network area is transmitted to the content synchronization entity from a gateway in the mobile communications system, which provides an interface between the first network area and the second network area.

11. The method of one of claims 1 to 10, wherein the first and second network areas belong to different radio access technologies supporting different data rates, and wherein the progress of the multicast service data provision in the second network area is different than the amount of multicast service data already transmitted in the first network area via the first data channel at the time the mobile node moves to the second network area.

12. The method of one of claims 1 to 11, wherein the amount of multicast service data which is to be provided via the additional data channel to the mobile node is based on the amount of multicast service data already transmitted in the first network area via the first data channel at the time the mobile node moves to the second network.

13. The method of claim 12, wherein the amount of multicast service data which is to be provided via the additional data channel to the mobile node is further based on the amount of multicast service data being provided via the at least second data channel.

14. The method of one of claims 1 to 13, wherein the step of configuring system resources in the mobile communications system in case it has been decided to establish the additional data channel comprises the steps of:
transmitting a request to a multicast service provider in the mobile communications system which provides the multicast service, for requesting the establishment of a new multicast service data provision to the mobile node, wherein the request further includes information on the amount of multicast service data already transmitted in the first network area via the first data channel at the time the mobile node moves to the second network area and information on the mobile node,
establishing system resources in the mobile communications system for enabling the new multicast service data provision to the mobile node, wherein the new multicast service data provision starts to provide multicast service data, which is chronologically at the same level as the amount of multicast service data already transmitted in the first network area via the first data channel at the time the mobile node moves to the second network area, for continuing the multicast service data provision.

15. The method of claim 14, further comprising the step of:
informing the mobile node about the new multicast service data provision by transmitting a new multicast address, which identifies the new multicast service data provision.

16. The method of one of claims 1 to 15, wherein the step of configuring system resources for the additional data channel, comprises the steps of:
configuring system resources in the core network of the mobile communications system for the additional data channel,
upon configuring the system resources in the core network, informing the mobile node about the system resources configured in the mobile communications system for the additional data channel.

17. The method of one of claims 1 to 16, wherein at least a second mobile node is provided with the multicast service via the at least second data channel in the second network area at the time the mobile node moves to the second network area, the method further comprising the steps of:
in case it has been decided to establish the additional data channel, informing the at least second mobile node about the additional data channel,
receiving by the at least second mobile node multicast service data via the at least second data channel and simultaneously via the additional data channel, and
upon completing the multicast service data provision for the at least second mobile node, releasing the system resources in the mobile communications system for the at least second data channel.

18. The method of one of claims 1 to 17, wherein a plurality of mobile nodes, comprising the mobile node, move from the first network area to the second network area at the same time,
wherein the step of deciding is based on information about the plurality of mobile nodes and about the amount of multicast service data already transmitted in the first network area via the first data channel at the time the plurality of mobile nodes move to the second network area, and
in case it has been decided to establish the additional data channel, the plurality of mobile nodes are informed via a broadcast channel about the system resources for the established additional channel.

19. The method of one of claims 1 to 18, wherein the first data rate is higher than the second data rate, and wherein the progress of the multicast service data provision via the at least second data channel is chronologically behind the amount of multicast service data already transmitted in the first network area via the first data channel at the time the mobile node moves to the second network area.

20. The method of claim 19, further comprising the steps of:
in case it has been decided to utilize the at least second data channel, waiting till the progress of the multicast service data provision via the at least second data channel is chronologically at the same level as the amount of multicast service data already transmitted in the first network area via the first data channel at the time the mobile node moves to the second network area, and
receiving by the mobile node multicast service data via the at least second data channel for continuing with the multicast service data provision in the second network area.

21. The method of claims 19 or 20, wherein the step of configuring system resources in the mobile communications system in case it has been decided to establish the additional data channel is based on the amount of data already transmitted in the first network area via the first data channel at the time the mobile node moves to the second network area.

22. The method of claims 19 to 21, wherein the step of deciding comprises the steps of:
determining the difference between the amount of multicast service data already transmitted in the first network area via the first data channel at the time the mobile node moves to the second network area and the progress of the multicast service data provision via the at least second data channel at the time the mobile node moves to the second network area, and
determining the remaining amount of multicast service data for the mobile node to complete the multicast service data provision,
wherein in case the determined difference is bigger than or equal to the remaining amount, it is decided to establish the additional data channel to continue the multicast service data provision for the mobile node in the second network area, and
wherein in case the determined difference is smaller than the remaining amount, it is decided to utilize the at least second data channel to continue the multicast service data provision for the mobile node in the second network area.

23. The method of claim 22, wherein in case a third data channel was previously established for another mobile node to continue the multicast service provision in the second network area for the another mobile node after the another mobile node moved to the second network area, the step of determining the difference determines the difference between the amount of multicast service data already transmitted in the first network area via the first data channel at the time the mobile node moves to the second network area and between the progress of the multicast service data provision via the third data channel at the time the mobile node moves to the second network area.

24. The method of one of claims 1 to 18, wherein the first data rate is lower than the second data rate, and wherein the progress of the multicast service data provision via the at least second data channel is chronologically ahead of the amount of multicast service data already transmitted in the first network area via the first data channel at the time the mobile node moves to the second network area.

25. The method of claim 24, wherein in case the mobile node is the first mobile node to enter the second network area after the beginning of the multicast service data provision in the second network area, it is decided to establish the additional data channel to continue the multicast service data provision for the mobile node, wherein the additional data channel is an additional multicast radio bearer.

26. The method of claims 24 or 25, wherein in case it has been decided to utilize the second data channel for continuing the multicast service data provision for the mobile node, the method further comprises the steps of:
establishing a new unicast data channel to the mobile node for continuing the multicast service data provision as far as to the progress of the second data channel at the time the mobile node moves to the second network area, and
receiving by the mobile node multicast service data via the second data channel and simultaneously via the new unicast data channel for completing the multicast service data provision for the mobile node in the second network area.

27. The method of one of claims 24 to 26, wherein the step of deciding comprises the steps of:
determining the difference between the amount of multicast service data already transmitted in the first network area via the first data channel at the time the mobile node moves to the second network area and the progress of the multicast service data provision via the at least second data channel at the time the mobile node moves to the second network area, and
determining the remaining amount of multicast service data for the at least second data channel to complete the multicast service data provision,
wherein in case the determined difference is bigger than or equal to the remaining amount, it is decided to establish the additional data channel to continue the multicast service data provision for the mobile node in the second network area, and
wherein in case the determined difference is smaller than the remaining amount, it is decided to utilize the at least second data channel to continue the multicast service data provision for the mobile node in the second network area, and to establish a new unicast data channel to the mobile node for continuing the multicast service data provision as far as to the progress of the second data channel at the time the mobile node moves to the second network area.

28. The method of claim 27, wherein in case a third data channel was previously established for another mobile node to continue the multicast service provision in the second network area after the another mobile node moved to the second network area, the step of determining the difference determines the difference between the amount of multicast service data already transmitted in the first network area via the first data channel at the time the mobile node moves to the second network area and the progress of the multicast service data provision via the third data channel at the time the mobile node moves to the second network area, and
wherein the step of determining the remaining amount determines the amount of multicast service data for the third data channel to complete the multicast service data provision.

29. A content synchronization entity for managing the continuous provision of a multicast service to a mobile node in a mobile communications system, upon the mobile node moving from a first network area, provided with the multicast service via a first data channel at a first data rate, to a second network area, provided with the multicast service via at least a second data channel at a second data rate, wherein the content synchronization entity comprises:
a processor adapted to decide, based on information relating to the amount of multicast service data already transmitted in the first network area via the first data channel at the time the mobile node moves to the second network area, whether to establish an additional data channel for the mobile node or whether to utilize one of the at least second data channels, to continue the multicast service provision to the mobile node in the second network area, and
the processor being adapted to configure system resources in the mobile communications system for the additional channel, in case it has been decided to establish the additional data channel.

30. The content synchronization entity of claim 29 being part of a multicast service provider, which provides the multicast service, or part of a gateway, which provides an interface between the first network area and the second network area, or part of a mobility management entity of the mobile node.

31. The content synchronization entity of claims 29 and 30 further comprising:
the processor adapted to request the information necessary to perform the decision from network entities in the mobile communications system, upon receiving an indication about the mobile node moving to the second network area, and
a receiver adapted to receive the information.

32. The content synchronization entity of claim 31, wherein the processor requests the information from a multicast service provider, which provides the multicast service, and/or from a gateway, which provides an interface between the first and second network area, and/or from a radio control entity, which controls radio resources in the second network area, and/or a mobility management entity of the mobile node.

33. The content synchronization entity of one of claims 29 to 32, wherein the processor further bases the decision on information about the progress of the multicast service data provision via the at least second data channel at the time the mobile node moves to the second network area, and/or on information about available system resources in the second network area, and/or on information about the receiving capability of the mobile node, and/or on information about the multicast service.

34. The content synchronization entity of one of claims 29 to 33, wherein in case the processor has decided to establish the additional data channel, the processor is further adapted to request a multicast service provider, which provides the multicast service, to setup an additional multicast session which is to be provided via the additional data channel, wherein the amount of multicast service data which is to be provided via the additional data channel for the additional multicast session depends on the amount of multicast service data already transmitted in the first network area via the first data channel at the time the mobile node moves to be second network.

35. The content synchronization entity of claim 34, wherein the amount of multicast service data which is to be provided via the additional data channel for the additional multicast session further depends on the amount of multicast service data being provided via the at least second data channel.

36. The content synchronization entity of claims 34 or 35, wherein a receiver is adapted to receive information on the additional multicast session from the multicast service provider, and
a transmitter is adapted to inform the mobile node about the additional multicast session being provided via the additional data channel.

37. The content synchronization entity of one of claims 29 to 36, wherein in case the processor has decided to establish the additional data channel, the processor is further adapted to decide whether the additional data channel is a separate unicast or multicast radio bearer, or whether the additional data channel is part of one of the at least second radio bearer.

38. The content synchronization entity of one of claims 29 to 37, wherein at least a second mobile node is provided with the multicast service via the at least second data channel in the second network area at the time the mobile node moves to the second network area, and
a transmitter is adapted to inform the at least second mobile node about the additional data channel, in case the processor has decided to establish the additional data channel.

39. The content synchronization entity of one of claims 29 to 38, wherein the first data rate is higher than the second data rate, and wherein the progress of the multicast service data provision via the at least second data channel is chronologically behind the amount of multicast service data already transmitted in the first network area via the first data channel at the time the mobile node moves to the second network area, and
the processor is further adapted to determine the difference between the amount of multicast service data already transmitted in the first network area via the first data channel at the time the mobile node moves to the second network area and the progress of the multicast service data provision via the at least second data channel at the time the mobile node moves to the second network area, and
the processor is further adapted to determine the remaining amount of multicast service data for the mobile node to complete the multicast service data provision,
wherein in case the processor determines that the difference is bigger than or equal to the remaining amount, the processor is adapted to decide to establish the additional data channel to continue the multicast service data provision for the mobile node in the second network area, and
wherein in case the processor determines that the difference is smaller than the remaining amount, the processor is adapted to decide to utilize the at least second data channel to continue the multicast service data provision for the mobile node in the second network area.

40. The content synchronization entity of claim 39, wherein in case a third data channel was previously established for another mobile node to continue the multicast service provision in the second network area for the another mobile node after the another mobile node moved to the second network area, the processor is adapted to determine the difference by determining the difference between the amount of multicast service data already transmitted in the first network area via the first data channel at the time the mobile node moves to the second network area and between the progress of the multicast service data provision via the third data channel at the time the mobile node moves to the second network area.

41. The content synchronization entity of one of claims 29 to 38, wherein the first data rate is lower than the second data rate, and wherein the progress of the multicast service data provision via the at least second data channel is chronologically ahead of the amount of multicast service data already transmitted in the first network area via the first data channel at the time the mobile node moves to the second network area, and
wherein in case the mobile node is the first mobile node to enter the second network area after the beginning of the multicast service data provision in the second network area, the processor is adapted to decide to establish the additional data channel to continue the multicast service data provision for the mobile node, wherein the processor is further adapted to decide that the additional data channel is a separate multicast radio bearer.

42. The content synchronization entity of claim 41, wherein in case the processor decides to utilize the second data channel for continuing the multicast service data provision for the mobile node, the processor is adapted to request a multicast service provider, which provides the multicast service, to setup a new unicast session which is to be provided to the mobile node via a new unicast data channel for continuing the multicast service data provision as far as to the progress of the second data channel at the time the mobile node moves to the second network area, and
a transmitter is adapted to inform the mobile node about the new unicast session being provided via the new unicast data channel.

43. The content synchronization entity of claims 41 and 42, wherein the processor is adapted to determine the difference between the amount of multicast service data already transmitted in the first network area via the first data channel at the time the mobile node moves to the second network area and the progress of the multicast service data provision via the at least second data channel at the time the mobile node moves to the second network area, and
wherein the processor is further adapted to determine the remaining amount of multicast service data for the at least second data channel to complete the multicast service data provision,
wherein in case the processor determines that the determined difference is bigger than or equal to the remaining amount, the processor is adapted to decide to establish the additional data channel to continue the multicast service data provision for the mobile node in the second network area, and
wherein in case the processor determines that the determined difference is smaller than the remaining amount, the processor is adapted to decide to utilize the at least second data channel to continue the multicast service data provision for the mobile node in the second network area, and to establish a new unicast data channel to the mobile node for continuing the multicast service data provision as far as to the progress of the second data channel at the time the mobile node moves to the second network area.

44. The content synchronization entity of claim 43, wherein in case a third data channel was previously established for another mobile node to continue the multicast service provision in the second network area for the another mobile node after the another mobile node moved to the second network area, the processor is adapted to determine the difference by determining the difference between the amount of multicast service data already transmitted in the first network area via the first data channel at the time the mobile node moves to the second network area and between the progress of the multicast service data provision via the third data channel at the time the mobile node moves to the second network area, and
the processor is further adapted to determine the remaining amount by determining the amount of multicast service data for the third data channel to complete the multicast service data provision.

45. The content synchronization entity of one of claims 29 to 44, further comprising means to perform or participate in the steps of the method according to one of claims 1 to 28.

46. A multicast service provider for providing a multicast service to mobile nodes in a mobile communications system, comprising the content synchronization entity of one of claims 29 to 45.

47. A gateway for interfacing at least a first and second network area in a mobile communications system, comprising the content synchronization entity of one of claims 29 to 45.

48. A mobility management entity for managing the mobility of a mobile node which moves between at least a first and second network area in a mobile communications system, comprising the content synchronization entity of one of claims 29 to 45.

49. A communication system comprising a multicast service provider, which provides a multicast service to a mobile node, comprising the mobile node which moves from a first network area to a second network area and comprising a content synchronization entity according to one of claims 29-45.
